(19) Europäisches Patentamt
European Patent Office
Office européen des brevets

(11) **EP 0 688 961 B1**

(12) **FASCICULE DE BREVET EUROPEEN**

(45) Date de publication et mention
de la délivrance du brevet:
**16.12.1998  Bulletin 1998/51**

(51) Int Cl.⁶: **F16B 5/06**, B60R 9/058

(21) Numéro de dépôt: **95401405.6**

(22) Date de dépôt: **15.06.1995**

(54) **Dispositif de fixation d'une semelle en matériau compressible sur une pièce support, notamment une semelle sur une pièce d'attache de barre de toit de véhicule**

Vorrichtung zur Befestigung einer Sohle aus pressbarem Material auf einem Träger, insbesondere einer Sohle auf einem Befestigungsteil von einem Dachträgerholm für Kraftfahrzeug

Device for fastening a sole of compressible material on a support, in particular a sole on a fastening element of a motor vehicle roof rack bar

(84) Etats contractants désignés:
**AT BE CH DE ES GB IT LI NL**

(30) Priorité: **23.06.1994  FR 9407723**

(43) Date de publication de la demande:
**27.12.1995  Bulletin 1995/52**

(73) Titulaire: **AUTOMAXI INDUSTRIES**
**F-35400 Saint Malo (FR)**

(72) Inventeur: **Ravier, Jean-Marie**
**F-35400 Saint Malo (FR)**

(74) Mandataire: **Lepercque, Jean et al**
**Cabinet Claude Rodhain SA**
**3, rue Moncey**
**75009 Paris (FR)**

(56) Documents cités:
**DE-A- 3 506 125          GB-A- 2 204 654**

• **PATENT ABSTRACTS OF JAPAN vol. 8, no. 28 (M-274) (1465) 7 Février 1984 & JP-A-58 185 344 (HITACHI KASEI KOGYO K.K.)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un dispositif de fixation d'une semelle en matériau compressible sur une pièce support.

Dans le cadre de l'invention, le terme semelle doit être compris dans son acceptation la plus générale. Ce terme englobe, notamment, les semelles proprement dites, les patins ou les plots.

Elle s'applique notamment, mais non exclusivement, au domaine automobile. Dans ce cadre, le dispositif concerne avantageusement un dispositif de fixation d'une semelle en caoutchouc ou d'un matériau similaire sur une pièce métallique d'attache de barre de toit pour véhicule.

Dans le cadre de l'invention, le terme "barre de toit" doit être compris également dans son acceptation la plus générale. Il peut s'agir notamment, outre des barres de toit proprement dites, d'arceaux ou d'éléments similaires. Le terme toit englobe également, par généralisation, d'autres parties du véhicule, telles que le coffre ou un panneau arrière.

Dans ce qui suit, pour fixer les idées et sans que cela soit en quoi que ce soit limitatif de la portée de l'invention, on se placera dans l'application préférentielle visée qui vient d'être rappelée.

Dans l'Art Connu, plusieurs procédés de fixation de semelle en caoutchouc ou matériau similaire sont connus.

On connaît notamment un procédé dit de "bouterollage à chaud". Selon ce procédé, on prépare tout d'abord les pièces à fixer en prévoyant, au moment de leur fabrication, des tétons en sur-épaisseur de la semelle. Ces tétons sont introduits dans des orifices percés dans le support métallique. Les extrémités de ces tétons sont ensuite portées à la fusion par ledit procédé. Il s'ensuit la création d'une collerette qui solidarisent la semelle au support métallique. L'inconvénient de ce procédé est que ladite collerette est de faible épaisseur.

Le matériel visant principalement les applications dites "grand public", celui-ci est vendu dans des "grandes surfaces" ou organisations de vente similaires, ce qui implique des manipulations par le public. L'expérience a montré que les dispositifs étaient souvent détériorés, par arrachement, avant leur mise en utilisation. En outre, ces détériorations sont en général irréversibles. D'autre part, après achat, des opérations fréquentes de montage/démontage conduisent également à un résultat analogue et se traduisent par la perte des semelles.

On connaît également des dispositifs de fixation à «clips» ou oreilles repliables sur le support. Ces dispositifs présentent des défauts similaires aux dispositifs précédents.

Une alternative consiste à fixer la semelle sur le support par collage. Cependant la semelle est habituellement obtenue par injection. On incorpore alors au matériau de base, par exemple l'élastomère, des produits démoulants. Or, ces produits sont le plus souvent incompatibles avec un collage de qualité. Il est alors nécessaire de traiter la surface pour éliminer ces produits, ce qui est une opération astreignante et délicate.

Par ailleurs, on connaît par le document DE-A-35 06 125 un dispositif de fixation comprenant une semelle et une pièce support dans lequel une protubérance de la semelle réalisée dans un matériau élastique est insérée dans un orifice du support avant d'être immobilisée par un objet de verrouillage introduit dans une cavité de ladite protubérance. L'objet de verrouillage, qui peut être une bille, provoque une déformation de la paroi interne et par suite de la paroi externe de la protubérance, laquelle est alors coincée entre l'objet de verrouillage et la paroi de la pièce support. Ce dispositif connu a l'inconvénient de laisser visible l'objet de verrouillage au terme de la fixation.

L'invention se propose de pallier les défauts de l'Art Connu, dont certains viennent d'être rappelés, ce sans augmenter le coût de fabrication ni la complexité du dispositif.

Le dispositif de fixation visé par l'invention comprend une semelle et une pièce support, au moins une protubérance de la semelle étant destinée à être insérée dans au moins un orifice de forme complémentaire du support parallèlement à un axe d'insertion déterminé, de manière à traverser la paroi du support de part en part, ladite protubérance étant en un matériau compressible doté de propriétés élastiques et présentant une cavité pour l'insertion d'un objet en un matériau non compressible destiné à assurer la rétention de la protubérance dans l'orifice.

Selon l'invention, le dispositif de fixation est caractérisé en ce que ladite protubérance est un téton dans lequel est ménagé un canal borgne débouchant en surface de la semelle et au fond duquel, dans une zone d'extrémité du téton. est inséré ledit objet en matériau non compressible, et en ce que les dimensions relatives dudit orifice et celles cumulées des parois dudit canal et dudit objet, selon au moins une direction d'un plan orthogonal audit axe d'insertion, sont déterminées de manière à autoriser la traversée complète de la paroi du support par l'extrémité du téton contenant ledit objet. par écrasement compressif de la paroi du canal lorsqu'on exerce une force de pression parallèle audit axe d'insertion, et la rétention de cette extrémité après traversée, le matériau de la paroi dudit canal reprenant son volume initial par effet élastique et ledit objet restant bloqué du côté du support opposé à l'insertion, de manière à solidariser la semelle au support.

On constate aisément que l'invention atteint bien les buts fixés. Le dispositif reste très simple et peu coûteux. Les matériaux de base (semelle, support) peuvent être identiques à ceux utilisés dans l'Art Connu. L'objet permettant la rétention peut être constitué par une bille en un matériau peu coûteux, plastique dur par exemple. L'opération de montage final (insertion) peut être exécutée par l'utilisateur, ce qui évite alors une opération de fabrication, l'étape de « bouterollage » à chaud par exemple, ce qui simplifie la gamme de fabrication. En outre, il n'est pas nécessaire de disposer d'un outillage spécialisé.

L'invention sera mieux comprise et d'autres caractéristiques et avantages apparaîtront à la lecture de la description qui suit en référence aux figures annexées, et parmi lesquelles:

- La figure 1 illustre, en perspective, un dispositif de fixation d'une semelle en matériau compressible sur un support métallique, selon un mode de réalisation préférée de l'invention;

- La figure 2a et 2b et 2c illustrent une semelle vue de dessous, dessus et en coupe latérale, respectivement.

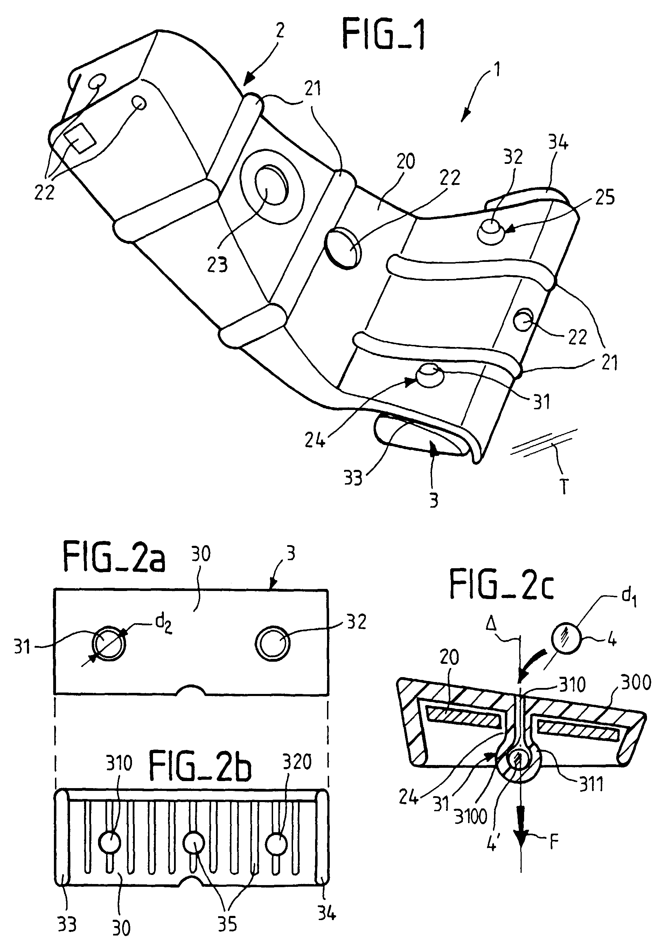

La figure 1 illustre, en perspective, un dispositif de fixation 1 d'une semelle 3, en matériau compressible, sur un support 2, en l'occurrence un support de barre de toit de véhicule. Dans l'exemple décrit, on n'a représenté que les pièces nécessaires à la bonne compréhension de l'invention. Notamment, on n'a représenté que la partie support 2 proprement dit.

Le support 2 comprend un corps principal 20 doté, comme il est usuel, de nervures 21 de renforcement. Il est également muni de divers orifices 22 destinés à l'insertion de vis, écrous ou autres organes de fixation, notamment d'un orifice principal 23, dans une zone centrale, destiné à laisser passer une tige filetée (non représentée coopérant avec d'autres pièces de fixation (également non représentées).

Cette configuration, en soi. est bien connue et ne diffère en rien de la technique antérieure. Il est donc inutile de la décrire plus avant.

Il est également connu de percer des orifices, 24 et 25, dans une zone inférieure du support 2. Ces orifices sont destinés à laisser passer des tétons, 31 et 32, d'une semelle 3 en matériau compressible tel que le caoutchouc, l'élastomère ou un matériau similaire. Cet aspect, en soi, est également connu.

Selon la technique antérieure, il est usuel d'effectuer une opération dite de "bouterollage à chaud" destinée à obtenir une fusion superficielle de l'extrémité des tétons 31 et 32. Par cette opération, on crée une collerette de faible épaisseur solidarisant la semelle 3 au corps 20 du support 2. On a indiqué les inconvénients de cette méthode.

Les caractéristiques plus spécifiques à l'invention seront mieux comprises par référence aux figures 2a à 2c.

La figure 2a représente un exemple de réalisation d'une semelle conforme à l'invention, vue de dessous.

On doit bien comprendre que les notions "dessus", dessous" ou "côté" sont purement arbitraires et se réfèrent à l'exemple illustré sur les figures 1a à 1c.

Dans l'exemple décrit, le "dessous" de la semelle est la partie en contact avec le toit T du véhicule (figure 1) ou, de façon plus générale, avec la surface sur laquelle repose l'ensemble [support 2 - semelle 3].

La semelle 3 a un corps 30 de forme sensiblement lamellaire (dans l'exemple décrit). Le dessous (figure 2a) est lisse. Le dessus (figure 2b), qui va être en contact avec le corps 20 du support 2, est avantageusement doté d'une structure nervurée 35 de renforcement. Enfin, le corps 30 comporte deux ailes latérales 33 et 34, dépassant du corps 20 du support, quand la semelle 2 est montée sur celui-ci (figure 1).

La figure 2c représente la semelle 3 en coupe latérale au niveau du téton 31. De façon plus spécifique à l'invention, les tétons 31 et 32 sont creux, et plus précisément sont munis d'un canal borgne (3100 pour le téton 31, seul visible sur cette figure). Ce canal affleure à la surface 300 (face inférieure) du corps 30 de la semelle : orifice 310. Un orifice 320 (et un canal associé non visible) est également prévu pour le téton 32.

Selon une autre caractéristique importante de l'invention, on introduit une bille 4 dans le canal 3100 de manière à ce qu'elle repose sur le fond de celui-ci. Pour ce faire, on peut utiliser un outil rudimentaire, telle qu'une tige de diamètre inférieur au diamètre ou, de façon plus générale, à la section de l'orifice 310, pour pousser la bille au fond du canal : position 4'. Si cette opération est réalisée au moment de la fabrication, elle peut naturellement être automatisée.

La bille peut être remplacée par un organe similaire : cheville, objet oblong. Il n'est pas en effet nécessaire que la pièce 4 introduite dans le canal, 3100, soit une sphère ou même soit dotée d'une section circulaire dans un plan orthogonal à l'axe d'introduction Δ, c'est-à-dire le plan tangent à la surface de la semelle 300 dans la zone d'introduction (autour des orifices 310 et 320).

De façon commune à l'Art Connu, le corps 20 du support 2 est muni, dans une zone appropriée, d'orifices d'introduction des tétons 31 et 32.

Cependant, selon une caractéristique supplémentaire de l'invention, on prévoit un profil des orifices, 24 et 25, complémentaire du profil de la section des tétons, 31 et 32. En outre, la dimension de la bille ou, de façon plus générale, les dimensions de l'objet 4 introduit dans le canal 3100, au moins selon une direction dudit plan orthogonal à l'axe Δ, augmentées des épaisseurs cumulées des parois des tétons (311 pour le téton 31) doivent être plus importantes que les dimensions des orifices 24 (ou 25) selon cette direction, à l'état de repos (non compressé). Pour solidariser la semelle 3 avec le support 2, il est nécessaire d'enfoncer l'extrémité du téton, 31 ou 32, dans l'orifice 24 ou 25, respectivement. Pour ce faire, on va exercer une force de pression suivant une direction (flèche f) sensiblement confondue avec l'axe d'insertion Δ de manière à enfoncer ladite extrémité et à ce que l'objet en position 4', c'est-à-dire au fond du canal (3100), ressorte de l'autre côté de la paroi du corps 20 du support 2. Il est donc nécessaire que les objets 4 puissent être introduits dans les orifices 24 ou 25, compte-tenu des dimensions cumulées des parois des tétons (par exemple 311 pour le téton 31), à l'état compressé. Cet état est le résultat de la pression exercée sur les parois des tétons, 31 et 32, par les parois, a priori indéformables, des orifices 24 et 25. Cette réduction de l'épaisseur des parois (311) est la conséquence des propriétés élastiques associées au matériau composant le corps 30 de la semelle 3, ce dernier étant compressible.

Dans un mode de réalisation préféré, on utilise des billes sphériques 4 et les orifices, 24 et 25, sont de section circulaire. Dans ce cas, la double inégalité rappelée ci-dessus peut s'exprimer simplement par les relations suivantes :

$$d_2 \geq d_1 + 2e' \qquad et \qquad d_1 + 2e \geq d_2 \; ;$$

avec "$d_1$", diamètre de la bille, "$d_2$", diamètre des orifices 24 et 25, "$e$" épaisseur de la paroi des canaux (par exemple du canal 311), "$e'$" l'épaisseur minimale de la paroi des canaux à l'état compressé. On a naturellement supposé, pour des raisons évidentes de standardisation, que les orifices 24 et 25 avaient un diamètre commun et que les billes utilisées étaient toutes identiques.

Le diamètre de la section des tétons, à l'état initial, c'est-à-dire sans billes ou éléments équivalents enfilés dans les canaux ( par exemple le canal 3100), n'est pas critique, du fait que l'on peut jouer su l'élasticité des parois. On choisit de préférence un diamètre sensiblement égal au diamètre $d_2$ des orifices 24 et 25.

Toujours dans un mode de réalisation préféré, on choisit le diamètre $d_1$ de la bille 4 légèrement supérieur au diamètre interne des orifices 310 et 320, de manière à ce que l'on doive l'enfoncer en force ou, pur le moins avec frottement. Cette disposition permet d'emprisonner la bille au fond des canaux et d'éviter tout risque de perte.

Pour fixer les idées, les matériaux utilisables pour la réalisation de la semelle 3 et du support 2, sont ceux généralement sélectionnés pour ce type d'application : acier pour le support 2, caoutchouc ou élastomère pour la semelle 3. Ce choix, dicté par des considérations technologiques, ne diffère en rien de l'art connu et est à la portée de l'Homme de Métier. Il est seulement nécessaire que le matériau constituant la semelle 3 soit doté de propriétés élastiques, au moins en ce qui concerne la zone des tétons 31 et 32.

Les billes 4 ou les éléments en faisant fonction doivent présenter une dureté suffisante au regard de matériau des tétons 31 et 32. On peut choisir des matériaux plastiques bon marché, par exemple du PVC, compatibles avec ce type d'application "grand public". Mais de nombreux autres matériaux conviennent : billes d'acier, type roulement à bille, etc.

Les conditions de tolérance auxquelles doivent satisfaire les éléments 4 ne sont pas non plus critiques. Il suffit que la double inégalité précédemment énoncée soit satisfaite.

Les dimensions géométriques précises des principaux constituants dépendent entièrement de l'application considérée. A titre d'exemple non limitatif, pour l'application préférentielle décrite en relation avec les figures 1 à 2c, la semelle 3 a des dimensions typiques de l'ordre de 10 cm sur 3 cm. Les tétons 31 et 32 ont un diamètre extérieur égal à 6 mm environ et les orifices 310 et 320 un diamètre de 4 mm environ, la paroi des tétons ayant une épaisseur (à l'état non compressé) de 1 mm environ. Les billes 4 sont en PVC et ont un diamètre de 5 mm environ. La zone inférieure du corps de la semelle 2 a des dimensions appropriées pour recevoir la semelle 3 ainsi définie.

On constate aisément, à la lumière de la description qui précède, que l'invention atteint bien les buts qu'elle s'est fixés. Le dispositif assure une fixation de la semelle 3 sur un support 3, de façon réversible et fiable, tout en restant simple et peu coûteux.

Bien que particulièrement adaptée aux applications automobiles dans le cadre des quelles elle a été décrite, elle n'est en aucun cas limitée à ce domaine. Elle s'applique à la fixation de toute semelle en matériau compressible sur un support, notamment mais non exclusivement métallique.

Il doit être clair également que l'invention n'est pas limitée aux seuls exemples de réalisations précisément décrits, notamment en relation avec les figures 1 à 2c.

Notamment, bien qu'un nombre de tétons égal à deux conviennent dans la majorité des cas, on peut tout à fait n'en prévoir, pour certaines applications, qu'un seul, ou au contraire plus de deux, ce sans sortir du cadre de l'invention.

On a également indiqué que la forme de la section des tétons, la forme des éléments diposés au fond des canaux ainsi que celles des différents orifices étaient susceptibles de variations importantes, sans sortir du cadre de l'invention.

**Revendications**

1. Dispositif (1) de fixation comprenant une semelle (3) et une pièce support (2), dans lequel au moins une protubérance (31, 32) de ladite semelle (3) est destinée à être insérée dans au moins un orifice (24, 25) de forme complémentaire dudit support (2) parallèlement à un axe d'insertion (Δ) déterminé, de manière à traverser la paroi du support (2) de part en part, ladite protubérance (31, 32) étant en un matériau compressible doté de propriétés élastiques et présentant une cavité (3100) pour l'insertion d'un objet (4') en un matériau non compressible destiné à assurer la rétention de la protubérance (31, 32) dans l'orifice (24, 25), ledit dispositif (1) de fixation étant caractérisé en ce que ladite protubérance est un téton (31,32) dans lequel est ménagé un canal borgne (3100) débouchant (310) en surface de la semelle (3) et au fond duquel dans une zone d'extrémité du téton (31, 32), est inséré ledit objet (4') en matériau non compressible, et en ce que les dimensions relatives dudit orifice (24, 25) et celles cumulées des parois dudit canal (3100) et dudit objet, selon au moins une direction d'un plan orthogonal audit axe d'insertion (Δ), sont déterminées de manière à autoriser la traversée complète de la paroi du support (2) par l'extrémité du téton (31, 32) contenant ledit objet (4'), par écrasement compressif de la paroi (311) du canal (3100) lorsqu'on exerce une force de pression parallèle audit axe d'insertion (Δ), et la rétention de cette extrémité après traversée, le matériau de la paroi (311) dudit canal (3100) reprenant son volume initial par effet élastique et ledit objet restant bloqué du côté du support (2) opposé à l'insertion, de manière à solidariser la semelle (3) au support (2).

2. Dispositif (1) selon la revendication 1, caractérisé en ce que la semelle (3) comporte deux tétons (31,32) et en ce que le support (2) comporte deux orifices (24, 25) appariés auxdits tétons (31, 32).

3. Dispositif (1) selon les revendications 1 ou 2, caractérisé en ce que ledit objet est une bille sphérique (4') et en ce que l'orifice (24, 25) du support (2) est circulaire.

4. Dispositif selon la revendication 3, caractérisé en ce que ladite bille sphérique (4') est enfoncée en force dans le fond du canal (3100).

5. Dispositif (1) selon les revendications 1 ou 2, caractérisé en ce que ledit objet (4, 4') est en matériau plastique.

6. Dispositif (1) selon les revendications 1 ou 2, caractérisé en ce qu'au moins le matériau de chaque téton (31,32) est en élastomère.

7. Dispositif (1) selon l'une quelconque des revendications précédentes, caractérisé en ce que la semelle (3) a une forme lamellaire comportant une face lisse (300) sur laquelle affleurent chacun desdits canaux (3100) et une face nervurée (35) au-dessus de laquelle lesdits tétons (31, 32) viennent en surépaisseur.

8. Application d'un dispositif (1) selon l'une quelconque des revendications précédentes à une pièce d'attache de barres de toit (T) pour véhicule.

**Claims**

1. Fastening device (1) comprising a sole (3) and a support piece (2), in which device at least one protrusion (31, 32) of the said sole (3) is intended to be insered in an least one orifice (24, 25) of a complementary shape in the said support (2), parallel to a given axis of insertion (Δ), so as to pass right through the wall of the support (2), the said protrusion (31, 32) being made of a compressible material endowed with elastic properties and having a cavity (3100) for inserting an object (4') made of an incompressible material intended to retain the protrusion (31, 32) in the orifice (24, 25), the said fastening device (1) being characterized in that the said protrusion is a stub (31, 32) in which there is formed a blind passage (3100) open (310) at the surface of the sole (3) and into the closed end of which, which lies in an end region of the stub (31, 32), the said object (4') made of an incompressible material is inserted, and in that the relative dimensions of the said orifice (24, 25) and the cumulative dimensions of the walls of the said passage (3100) and of the said object, in at least one direction of a plane orthogonal to the said axis of insertion (Δ), are determined so as to allow the end of the stub (31, 32) containing the said object (4') to pass completely through the wall of the support (2) by compressive crushing of the wall (311) of the passage (3100) when a pressure force is exerted parallel to the said axis of insertion (Δ), and so as to retain this end after it has passed through, the material of the wall (311) of the said passage (3100) returning to its initial volume under an elastic effect, and the said object remaining trapped on the opposite side of the support (2) to the insertion side, so as to secure the sole (3) to the support (2).

2. Device (1) according to Claim I, characterized in that the sole (3) comprises two stubs (31, 32) and in that the support (2) comprises two orifices (24, 25) paired with the said stubs (31, 32).

3. Device (1) according to Claim 1 or 2, characterized in that the said object is a spherical bead (4') and in that the orifice (24, 25) in the support (2) is circular.

4. Device according to Claim 3, characterized in that the said spherical bead (4') is forcibly driven into the closed end of the passage (3100).

5. Device (1) according to Claim 1 or 2, characterized in that the said object (4, 4') is made of plastic.

6. Device (1) according to Claim 1 or 2, characterized in that at least the material of each stub (31, 32) is made of an elastomer.

7. Device (1) according to any one of the preceding claims, characterized in that the sole (3) has a strip shape having one smooth face (300) with which each of the said passages (3100) is flush, and a ribbed face (35) from which the said stubs (31, 32) extend as added thickness.

8. Application of a device (1) according to any one of the preceding claims, to a piece for fastening motor vehicle roof rack bars to a roof (T).

**Patentansprüche**

1. Befestigungsvorrichtung (1) mit einer Sohle (3) und einem Träger (2), bei welcher zumindest eine Ausstülpung (31, 32) der Sohle (3) dafür eingerichtet ist, in zumindest eine Öffnung (24, 25) von komplementärer Form zu dem Träger (2) parallel zu einer bestimmten Einschiebachse (Δ) derart eingeschoben zu werden, daß sie die Wand des Trägers (2) schrittweise durchquert, wobei die Ausstülpung (31, 32) aus einem zusammenpreßbaren Material mit elastischen Eigenschaften ist und eine Vertiefung (3100) zum Einsetzen eines Elementes (4') aus einem nicht zusammenpreßbaren Material aufweist, welches dafür eingerichtet ist, den Rückhalt der Ausstülpung (31, 32) in der Öffnung (24, 25) zu gewährleisten, wobei die Befestigungsvorrichtung (1) dadurch gekennzeichnet ist, daß die Ausstülpung ein Ansatz (31, 32) ist, in welchem ein Scheinkanal (3100) angeordnet ist, welcher in die Oberfläche der Sohle (3) einmündet (310), und auf dessen Grund in einem Endbereich des Ansatzes (31, 32) das Element (4') aus nicht zusammenpreßbarem Material eingesetzt ist, und daß die relativen Abmessungen der Öffnung (24, 25) und die sich addierenden der Wände des Kanals (3100) und des Elementes entlang zumindest einer Richtung einer zu der Einschiebachse (Δ) rechtwinkligen Ebene derart festgelegt sind, daß das vollständige Durchqueren der Wand des Trägers (2) durch das Ende des Ansatzes (31, 32), welcher das Element (4') enthält, durch zusammenpressende Druckverformung der Wand (311) des Kanals (3100) bei Ausübung einer zu der Einschiebachse (Δ) parallelen Druckkraft und der Rückhalt dieses Endes nach Durchquerung ermöglicht wird, wobei das Material der Wand (311) des Kanals (3100) durch elastische Wirkung sein Anfangsvolumen wieder einnimmt und das Element auf der Seite des Trägers (2), welche dem Einschub gegenüberliegt, derart blockiert bleibt, daß die Sohle (3) mit dem Träger (2) einstückig ausgebildet wird.

2. Vorrichtung (1) gemäß Anspruch 1, dadurch gekennzeichnet, daß die Sohle (3) zwei Ansätze (31, 32) aufweist, und daß der Träger (2) zwei Öffnungen (24, 25), welche mit den Ansätzen (31, 32) zusammenpassen, aufweist.

3. Vorrichtung (1) gemäß Anspruch 1 oder 2, dadurch gekennzeichnet, daß das Element eine kleine Kugel (4') und daß die Öffnung (24, 25) des Trägers (2) kreisförmig ist.

4. Vorrichtung gemäß Anspruch 3, dadurch gekennzeichnet, daß die kleine Kugel (4') mit Kraft in den Boden des Kanals (3100) hineingedrückt wird.

5. Vorrichtung (1) gemäß Anspruch 1 oder 2, dadurch gekennzeichnet, daß das Element (4, 4') aus Plastikmaterial ist.

6. Vorrichtung (1) gemäß Anspruch 1 oder 2, dadurch gekennzeichnet, daß zumindest das Material jedes Ansatzes (31, 32) aus Elastomer ist.

7. Vorrichtung (1) gemäß irgendeinem der vorherigen Ansprüche, dadurch gekennzeichnet, daß die Sohle (3) eine lamellierte Form hat, welche eine glatte Fläche (300) aufweist, auf welcher jeder der Kanäle (3100) zu Tage tritt und eine gerippte Fläche (35), oberhalb derer die Ansätze (31, 32) wulstig angeordnet sind.

8. Verwendung einer Vorrichtung (1) gemäß irgendeinem der vorherigen Ansprüche bei einem Befestigungsteil von einem Dachträgerholm (T) für Kraftfahrzeug.

# FIG_1

# FIG_2a

# FIG_2b

# FIG_2c